# EUROPÄISCHE PATENTANMELDUNG

(11) **EP 0 880 219 A2**
(43) Veröffentlichungstag der Anmeldung: **25.11.1998**
(21) Anmeldenummer: 98810435.2
(22) Anmeldetag: 13.05.1998
(51) Int. Cl.: H02K 15/09, H02K 15/085

(54) **Verfahren und Vorrichtung zum Wickeln von Spulen in Axialnuten rotationssymmetrischer Körper von elektrischen Geräten**

(30) Priorität: 16.05.1997 EP 97810305
(71) Anmelder: ATS Wickel- und Montagetechnik AG, 5436 Würenlos (CH)
(72) Erfinder: Ulrich, Peter, 8964 Rudolfstetten (CH); Zihlmann, Siegfried, 5436 Würenlos (CH); Bolli, Thomas, 5313 Klingnau (CH)
(74) Vertreter: Patentanwälte Breiter + Wiedmer AG

(57) **Zusammenfassung**

Bei einem Verfahren zum Wickeln von Spulen in am Aussenumfang rotationssymmetrischer Körper (24) von elektrischen Geräten angeordnete Axialnuten (30) wird zumindest ein von einem um eine senkrecht zur Rotationsachse des Körpers (24) liegende Drehachse (y) bewegbaren Wickelarm (56) geführter Draht (60) über eine Wickelform (38) in die Nuten (30) eingelegt. Der Körper (24) wird jeweils nach dem durch eine erste Schwenkbewegung des Wickelarmes (56) um seine Drehachse (y) erfolgten Einlegen des Drahtes (60) in eine erste Nut (30) um wenigstens eine Nutenteilung (n) um seine Rotationsachse gedreht, der Draht (60) durch eine der ersten Schwenkbewegung entgegengesetzte zweite Schwenkbewegung in eine zweite Nut (30) eingelegt und nach dem Einlegen in die zweite Nut zur Bildung einer Spulenwicklung durch eine weitere Drehung an den Anfang der ersten Nut zurückgeführt. Eine geeignete Wickel form (38) weist einen Drahtführungsschlitz (46) auf, der in einer hinterschnittenen Nut (50) endet, dessen Hinterschneidungsflächen (52) den Draht (60) bis zur Vollendung der nachfolgenden Schwenkbewegung des Wickelarmes (56) am Nutgrund fixiert.

## Beschreibung

Die Erfindung betrifft ein Verfahren zum Wickeln von Spulen in am Aussenumfang rotationssymmetrischer Körper von elektrischen Geräten angeordnete Axialnuten, wobei zumindest ein von einem um eine Drehachse bewegbaren Wickelarm geführter Draht über eine Wickelform in die Nuten eingelegt wird. Im Rahmen der Erfindung liegen auch zwei zur Durchführung des Verfahrens geeignete Vorrichtungen.

Zum Wickeln von Spulen bei Kollektorankern ist es bekannt, den Draht über rotierende Wickelarme in einander paarweise gegenüberliegende Axialnuten einzulegen. Sobald eine Spule vollständig gewickelt ist, wird der Anker zur Wicklung der nächsten Spule um seine Rotationsachse so gedreht, dass das die nächste Spule aufnehmende Nutenpaar mit dem Wickelarm in Wickelposition steht. Das Einführen des Drahtes durch die rotierenden Wickelarme erfolgt über sogenannte Wickelformen, die als Einlegehilfe für den in die Nuten einzulegenden Draht dienen.

Ein Verfahren sowie eine Vorrichtung der eingangs genannten Art sind beispielsweise in der EP-A-O 703 658 offenbart. Ein wesentlicher Nachteil der vorbekannten Wicklungsmethode mit rotierenden Wickelarmen liegt darin, dass diese praktisch nur Spulenwicklungen in einander diametral gegenüberliegende Axialnuten erlauben.

Bei Statoren von sogenannten Elektronikmotoren sind die einzelnen Spulen jeweils um einen Blechzahn des Stators gewickelt, d.h. der Draht einer Spulenwicklung ist in einander benachbarte Axialnuten eingelegt. Die Art der Wicklung liess sich bis heute nicht auf einfache Weise maschinell herstellen.

Der vorliegenden Erfindung liegt daher die Aufgabe zugrunde, ein Wickelverfahren der eingangs genannten Art sowie eine zur Durchführung des Verfahrens geeignete Wickelvorrichtung zu schaffen, mit denen auch Spulen um einzelne Zähne bzw. Stege gewickelt werden können.

Bezüglich des Verfahrens führt zur erfindungsgemässen Lösung der Aufgabe, dass der Körper jeweils nach dem durch eine erste Schwenkbewegung des Wickelarmes um seine Drehachse erfolgten Einlegen des Drahtes in eine erste Nut um wenigstens eine Nutenteilung um seine Rotationsachse gedreht, der Draht durch eine der ersten Schwenkbewegung entgegengesetzte zweite Schwenkbewegung in eine zweite Nut eingelegt und nach dem Einlegen in die zweite Nut zur Bildung einer Spulenwicklung durch eine weitere Drehung des Körpers an den Anfang der ersten Nut zurückgeführt wird.

Der Begriff "Draht" umfasst neben einem einzelnen Draht gegebenenfalls auch mehrere Drähte, die zur Wicklung einer Mehrfachspule gleichzeitig in die Nuten eingelegt werden.

Durch die erfindungsgemässe Kombination einer Schwenkbewegung des Wickelarms gefolgt von einer Drehung des Körpers wird es möglich, die Wicklungen einer Spule in einander direkt benachbarte Nuten einzulegen, d.h. die Spulen um einzelne, durch Nuten getrennte Zähne bzw. Stege zu wickeln. Obschon dieses Verfahren besonders zum Wickeln einer Spule um einen einzelnen Zahn geeignet ist, ist selbstverständlich auch das Bewickeln weiter auseinanderliegender Nutenpaare möglich.

Eine erste zur Durchführung des erfindungsgemässen Verfahrens geeignete Vorrichtung umfasst eine Einrichtung zum Aufspannen und Verschalten des zu bewickelnden Körpers um wenigstens eine Nutenteilung, wenigstens einen Wickelarm zur Drahtführung sowie wenigstens eine Wickelform als Einlegehilfe für den in die Nuten einzulegenden Draht. Erfindungsgemäss weist die Wickelform einen Drahtführungsschlitz mit wenigstens einer quer zur Schlitzebene angeordneten Rückhaltefläche auf, die zur zeitweiligen Fixierung des Drahtes am Grund der Nut während der Schwenkbewegung des Wickelarmes dient.

Bei einer bevorzugten Ausführungsform der ersten erfindungsgemässen Vorrichtung endet der Drahtführungsschlitz der Wickelform in einer hinterschnittenen Nut, wobei die Hinterschneidungsflächen die vorstehend erwähnten Rückhalteflächen bilden.

Zweckmässigerweise ist die Wickelform querschnittlich im wesentlichen U-förmig mit einem Bodenteil und zwei von diesem abragenden Schenkelteilen ausgebildet und der Drahtführungsschlitz endet in den beiden Schenkelteilen in je einer hinterschnittenen Nut. Hierbei bildet der Boden der hinterschnittenen Nut bevorzugt eine die Nut gegen die Aussenseite der Schenkelteile erweiternde Schrägfläche.

Damit bei hohen Wicklungen die Drähte nicht verklemmen, ist bei einer bevorzugten Ausführungsform vorgesehen, dass die Wickelform radial zum Körper bewegbar angeordnet ist.

Eine zweite zur Durchführung des erfindungsgemässen Verfahrens geeignete Vorrichtung umfasst eine Einrichtung zum Aufspannen und Verschalten des Körpers um wenigstens eine Nutenteilung, wenigstens einen Wickelarm zur Drahtführung sowie Wickelformen als Einlegehilfe für den in die Nuten einzulegenden Draht, wobei die Wickelformen einen Drahtführungsschlitz mit einer Schlitzebene bilden. Erfindungsgemäss sind beidseits der Wickelformen zur Rückhaltung des Drahtes in der Nut während der Schwenkbewegung des Wickelarmes zwei starr miteinander verbundene Sperrelemente angeordnet, wobei die Sperrelemente durch den in die Nut einzulegenden Draht während des Einlegevorganges gegen die Kraft eines Federelementes in eine Offenstellung bringbar und nach erfolgtem Einlegen des Drahtes in die Nut durch die Kraft des Federelementes selbsttätig in eine die Schlitzebene querende Schliessstellung rückführbar sind.

Bei einer bevorzugten Ausführungsform der zweiten erfindungsgemässen Vorrichtung sind die Sperrelemente als Sperrhebel ausgebildet und um eine gemeinsame Drehachse von der Offenstellung in die Schliessstellung schwenkbar.

Zweckmässigerweise sind die Sperrhebel beidends eines in einer der Wickelformen drehbar gelagerten Bolzens festgelegt.

Das Federelement ist im einfachsten Fall eine am Sperrelement angreifende Feder, beispielsweise in Form einer Spiral- oder Blattfeder aus Stahl. Ein bevorzugtes Federelement ist ein pneumatischer Zylinder. Durch Einstellung eines entsprechenden Luftdruckes im pneumatischen Zylinder kann die auf die Sperrelemente einwirkende Kraft auf einfache Weise eingestellt werden.

Bei der zweiten erfindungsgemässen Vorrichtung erfolgt die Bewegung der beiden Sperrelemente in die Offenstellung unmittelbar durch den Draht selber während des Einlegens in die Nut, d.h. durch das Einlegen des Drahtes in die Nut erfolgt eine Zwangssteuerung der Sperrelemente. Unmittelbar nachdem der Draht die Sperrelemente passiert hat und in die Nut eingelegt ist, werden die Sperrelemente durch die Kraft des Federelementes in die Schliessstellung zurückgeführt. Der Zeitpunkt des Schliess- und Öffnungsvorganges kann durch die Stellung des Wickelarmes zum Körper sowie durch eine entsprechend gewählte Federkraft auf optimale Wickelverhältnisse eingestellt werden. Durch die Rückhaltevorrichtung mit selbsttätig arbeitenden Sperrelementen entfällt eine komplexe Steuerung der Mechanik.

Mit dem erfindungsgemässen Verfahren und den Vorrichtungen lassen sich alle bekannten Rotoren und Statoren von elektrischen Motoren und Generatoren wickeln, bei denen die Wickelspulen in am Aussenumfang der Statoren bzw. Rotoren angeordneten Axialnuten eingelegt sind. Ein besonderer Anwendungsbereich betrifft das Anbringen von Spulen um einzelne oder mehrere Zähne bei Statoren von sogenannten Elektronikmotoren.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- - Fig. 1: eine teilweise geschnittene Seitenansicht einer ersten Ausführungsform einer Wickelmaschine;
- - Fig. 2: eine Teilansicht der Wickelmaschine von Fig. 1 in Blickrichtung w;
- - Fig. 3: eine Draufsicht auf einen Teil der Wickelmaschine von Fig. 1:
- - Fig. 4 - 6: eine Frontsicht auf die Wickelform von Fig. 1 in verschiedenen Wicklungsstadien;
- - Fig. 7: eine teilweise geschnittene Seitenansicht der Anordnung von Fig. 4;
- - Fig. 8: eine teilweise geschnittene Seitenansicht der Anordnung von Fig. 6.
- - Fig. 9: eine Draufsicht auf eine zweite Ausführungsform einer Wickelmaschine;
- - Fig. 10: eine teilweise geschnittene Ansicht der Anordnung von Fig. 9 in Blickrichtung c.

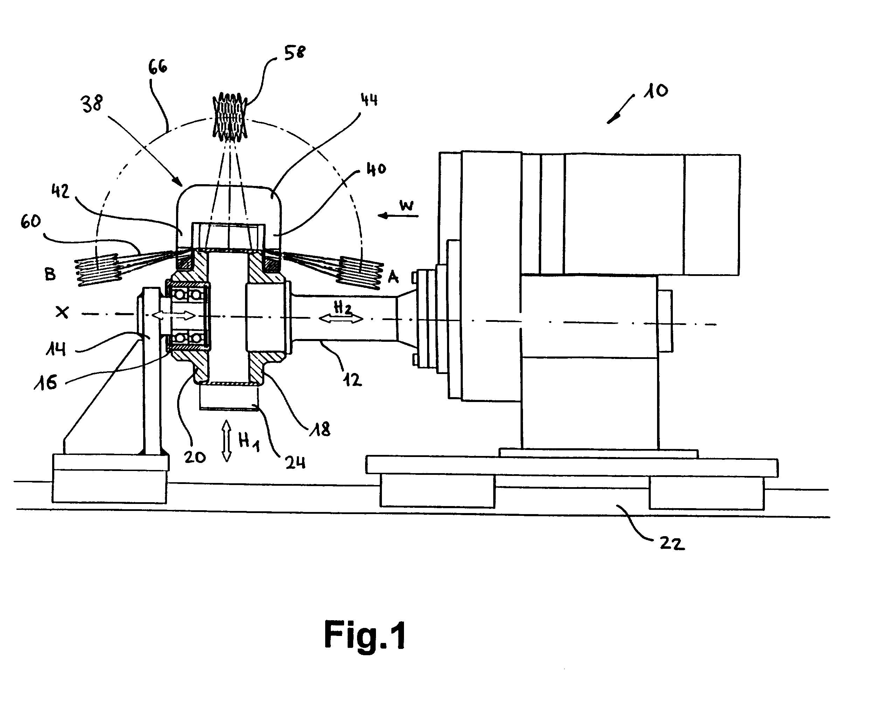

Eine in Fig. 1 bis 3 dargestellte erste Ausführungsform einer Wickelmaschine umfasst einen Schaltapparat 10 mit einem ersten Spannwerkzeug 12 sowie ein Gegenlager 14 mit einem auf diesem frei drehbar gelagerten zweiten Spannwerkzeug 16.

Schaltapparat 10 und Gegenlager 14 sind auf Schienen 22 verfahrbar angeordnet. Auf die Spannwerkzeuge 12, 16 sind Aufnahmeteile 18 bzw. 20 aufgesetzt, die zum Spannen eines zwischengeordneten Stators 24 in dessen Bohrung eingefahren werden.

Der zwischen den beiden Aufnahmeteilen 18, 20 eingespannte Stator 24 ist um seine Rotationsachse x, die der Spannachse von Schaltapparat 10 und Gegenlager 14 entspricht, drehbar eingespannt.

Der Stator 24 -- im gezeigten Beispiel ein Aussenläufer -- besteht im wesentlichen aus einem Ring 26 mit von diesem radial nach aussen abragenden Zähnen 28, die Axialnuten 30 als Schlitze zur Aufnahme einer Drahtwicklung bilden. Die einzelnen Zähne 28 des Stators 24 weisen ein querschnittlich etwa T-förmiges freies Ende 32 auf. Die freien Enden 32 der Zähne 28 bilden die durch Oeffnungschlitze 36 der Axialnuten 30 zur Drahteinführung unterbrochene äussere Oberfläche 34 des Stators 24.

Eine querschnittlich etwa U-förmige Wickelform 38 umfasst einen Bodenteil 44, von dem zwei Schenkelteile 40, 42 abragen. Ein Drahtführungsschlitz 46 einer Breite s, die etwa der Breite der Oeffnungsschlitze 36 der Axialnuten 30 entspricht, durchsetzt den Bodenteil 44 sowie teilweise die beiden Schenkelteile 40, 42 und endet in diesen in je einer hinterschnittenen Nut 50.

Die hinterschnittene Nut 50 in jedem der beiden Schenkelteile 40, 42 weist zwei Hinterschneidungsflächen 52 auf, die -- wie weiter unten erläutert -- als Rückhalteflächen zur zeitweiligen Drahtfixierung während des Wickelvorganges dienen. Der Boden 54 der Nut 50 bildet eine Schrägfläche, so dass die Nut 50 gegen die Aussenseite der Schenkelteile 40, 42 erweitert ist.

Während des Wickelvorganges ist die Wickelform 38 so über dem Stator 24 angeordnet, dass die beiden Schenkelteile 40, 42 den Stator 24 übergreifen und der Drahtführungsschlitz 46 mit der jeweils zu bewickelnden Axialnut 30 zusammenfällt. Als Einführungshilfe für den in die Wickelform 38 einzuführenden Draht ist der Bodenteil 44 mit einer queschnittlich im wesentlichen V-förmigen Erweiterung 48 versehen.

Das Bewickeln des Stators 24 mit einem Wickeldraht 60 erfolgt über einen Wickelarm 56, der in einem Winkel β zur Drehachse y auf der Achswelle 62 einer Antriebseinheit 64 angeordnet ist.

Der Wickeldraht 60, der auch aus mehreren Drähten zur Wicklung einer Mehrfachspule bestehen kann, ist über eine am freien Ende des Wickelarmes 56 angeordnete Drahtführungsrolle 58 geführt und liegt während der Schwenkbewegung des Wickelarms 56 in der durch den Drahtführungsschlitz 46 in der Wickelform 38 definierten Schlitzebene E, in der auch die zu bewickelnde Axialnut 30 liegt. Im vorliegenden Beispiel ist die Drahtführungsrolle 58 zur Wicklung einer Mehrfachspule mit vier Drähten ausgebildet.

Der Wickelarm 56 bzw. dessen Drahtführungsrolle 58 beschreibt bei der Schwenkbewegung einen in der Schlitzebene E liegenden Teilkreis 66 zwischen zwei Endstellungen A und B. Der Schwenkwinkel a zwischen den beiden Endstellungen A und B beträgt etwas mehr als 180°.

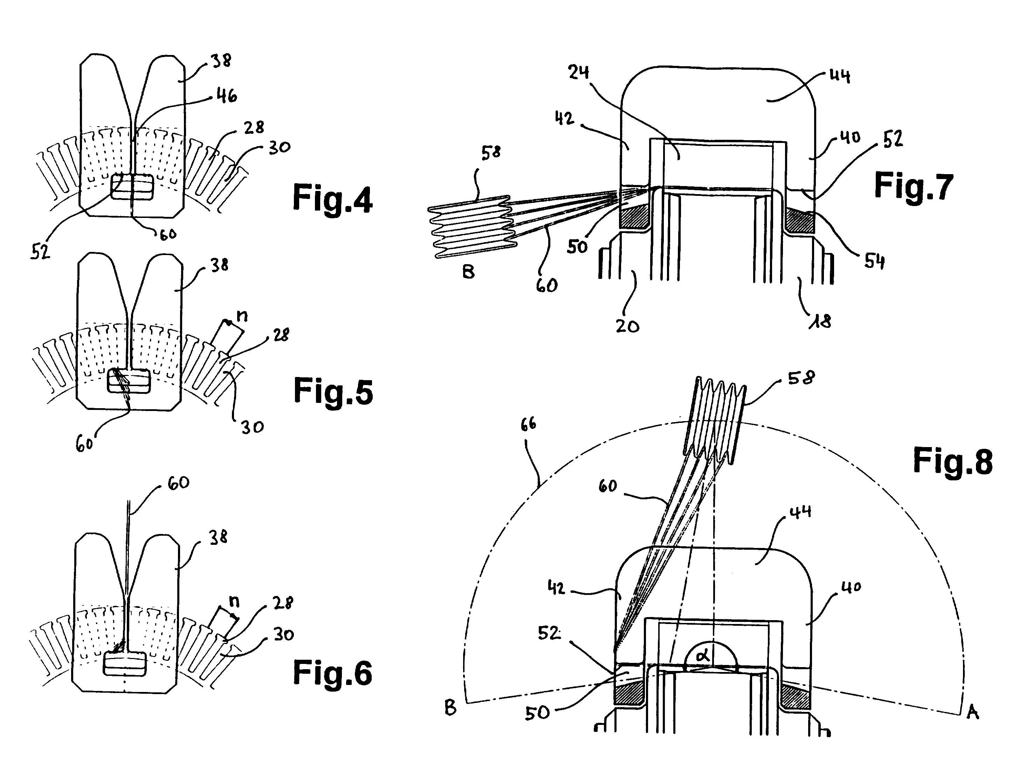

Das erfindungsgemässe Verfahren bzw. die Funktionsweise der ersten Ausführungsform der erfindungsgemässen Vorrichtung wird nachstehend anhand der Fig. 4 bis 8 näher erläutert.

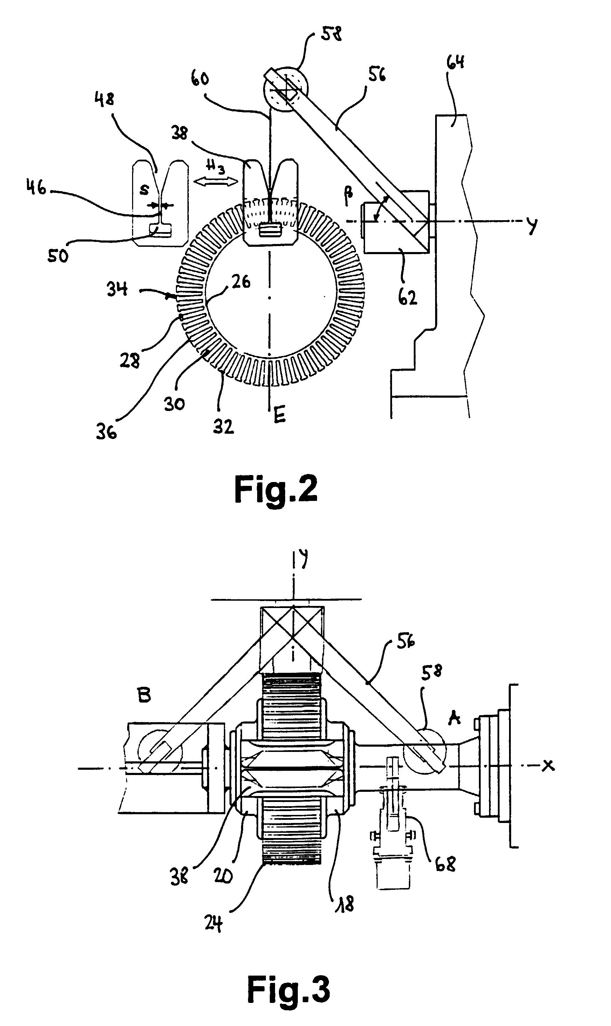

Zu Beginn des Wickelvorganges wird das freie Ende des Wickeldrahtes 60 mittels eines in Fig. 3 angedeuteten Drahtklemmers 68 fixiert. Durch eine erste Schwenkbewegung des Wickelarmes 56 aus einer ersten Endstellung A in eine zweite Endstellung B wird der Wickeldraht 60 in eine erste Axialnut 30 eingelegt (Fig. 4 und 7).

Nachdem der Wickelarm 56 seine zweite Endstellung B erreicht hat, wird der Stator 24 über den Schaltapparat 10 um eine Nutenteilung n gedreht. Bei dieser Drehung schiebt sich die Hinterschneidungsfläche 52 der hinterschnittenen Nut 50 über den seitlich aus der Axialnut 30 austretenden Wickeldraht 60, so dass dieser am Nutgrund gehalten wird Fig. 5).

Während der nachfolgenden Schwenkbewegung des Winkelarms 56 von der zweiten Endstellung B zurück in die erste Endstellung A wird somit der Wickeldraht 60 durch die Wickelform 38 einseitig niedergehalten und rutscht erst dann endgültig in die Axialnut 30, wenn der Wickelarm 56 wiederum die erste Endstellung A erreicht hat. Fig. 6 und 8 zeigen die Lage des Wickeldrahtes 60 während der Schwenkbewegung des Wickelarmes 56 zwischen den beiden Endstellungen A und B. Der durch die Hinterschneidungsfläche 52 am Nutgrund festgehaltene Wickeldraht 60 überspannt in dieser Phase des Wickelvorganges die Aussenseite des Schenkelteiles 42 in derem durch die Hinterschneidungsfläche 52 und den Drahtführungsschlitz 46 begrenzten Eckbereich. Nach erfolgtem Einlegen des Wickeldrahtes 60 in die Nut 30 wird der Stator 24 wiederum um eine Nutenteilung n gedreht. Diese Drehung erfolgt zu der in Fig. 5 gezeigten Drehung in entgegengesetzter Richtung, so dass auf der anderen Seite der Wickelform 38 die Hinterschneidungsfläche 52 der Nut 50 des anderen Schenkelteiles 40 sich über den Wickeldraht 60 schiebt und diesen während der nachfolgenden Schwenkbewegung des Wickelarmes 56 wiederum am Nutgrund fixiert.

Damit bei hohen Wicklungen, d.h. wenn die Axialnuten 30 praktisch mit Wickeldraht aufgefüllt werden, die Wickeldrähte 60 in der hinterschnittenen Nut 50 der Wickelform 38 nicht verklemmen, kann die Wickelform 38 bei Bedarf radial vom Stator 24 nach aussen bzw. in den in der Zeichnung dargestellten Beispielen nach oben bewegt werden.

Die in der Zeichnung angegebenen Doppelpfeile geben den Maschinenablauf bei der Automatisierung des Wickelvorganges wieder. Ueber eine vertikale Handlingachse H₁ wird der Stator 24 von unten in die Wickelposition gebracht. Zum Spannen des Stators 24 werden die Aufnahmeteile 18, 20 auf dem Schaltapparat 10 bzw. dem Gegenlager 14 über eine zweite Handlingachse H₂ in die Bohrung des Stators 24 eingefahren. Anschliessend bringt eine weitere Handlingachse H₃ die Wickelform 38 über den Stator 34.

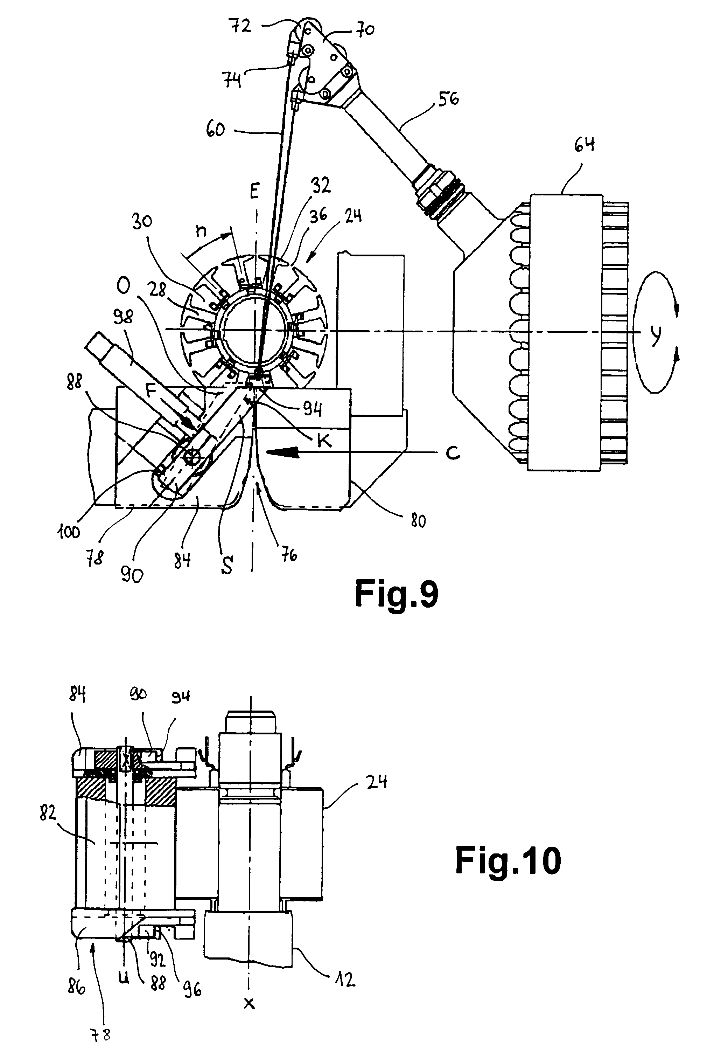

Eine in Fig. 9 und 10 dargestellte zweite Ausführungsform einer Wickelmaschine ist in wesentlichen Teilen mit der ersten Ausführungsform vergleichbar. Der Einfachheit halber sind deshalb vergleichbare Teile mit gleichen Bezugszeichen gekennzeichnet. Die gezeigte Anordnung zur gleichzeitigen Einlegung von zwei Wickeldrähten 60 weist einen am freien Ende des Wickelarmes 56 drehbar gelagerten Drahtführer 70 mit Umlenkrollen 72 und Drahtausgabeöffnungen 74 für die über einen zentralen Drahtführungskanal im Wickelarm 56 geführten Wickeldrähte 60 auf. Eine derartige Wickelmaschine mit drehbar gelagertem Drahtführer ist Gegenstand der schweizerischen Patentanmeldung Nr. 0129/98.

Als Einlegehilfe für den Wickeldraht 60 dienen Wickelformen 78, 80, die so zueinander angeordnet sind, dass zwischen diesen ein Drahtführungsschlitz 76 zum Einführen des Wickeldrahtes 60 in die Axialnuten 30 gebildet wird.

Die Wickel form 78 weist ein oberes Seitenteil 84 und ein unteres Seitenteil 86 auf. Die beiden Seitenteile 84, 86 sind über ein Zwischenstück 82 in Abstand zueinander angeordnet.

Ein Bolzen 88 ist in der Wickelform 78 um die parallel zur Rotationsachse x des Stators 24 liegende Bolzenachse u drehbar gelagert. An den beiden Enden des Bolzens 88 sind ein oberer Sperrhebel 90 sowie ein unterer Sperrhebel 92 angeordnet und über den Bolzen 88 starr miteinander verbunden.

Die gegen den Stator 24 weisenden Enden 94, 96 der Sperrhebel 90, 92 schneiden in ihrer Schliessstellung S die Schlitzebene E und verschliessen hierbei querschnittlich die zu bewickelnde Nut 30. Die Sperrhebel 90, 92 werden durch einen am oberen Sperrhebel 90 seitlich angreifenden pneumatischen Zylinder 98 während der Schwenkbewegung des Wickelarmes 56 zwischen den beiden Endstellungen A und B in Schliessstellung S gehalten, wobei das vom Stator 24 wegweisende freie Ende des oberen Sperrhebels 90 in der Schliessstellung S seitlich einem Anschlagelement 100 anliegt.

Die Funktionsweise der zweiten Ausführungsform der erfindungsgemässen Vorrichtung wird nachstehend anhand der Fig. 9 näher erläutert.

Durch eine erste Schwenkbewegung des Wickelarmes 56 aus einer ersten Endstellung A in eine zweite Endstellung B (vgl. Fig. 8) wird der Wickeldraht 60 in eine erste Axialnut 30 eingelegt. Bei vollständig eingelegtem Wickeldraht 60, d.h. wenn der Wickelarm 56 sich in der zweiten Endstellung B befindet, sind die Sperrhebel 90, 92 in ihrer Schliessstellung S.

Nachdem der Wickelarm 56 seine zweite Endstellung B erreicht hat, wird der Stator 24 um eine Nutenteilung n gedreht. Während der nachfolgenden Schwenkbewegung des Wickelarmes 56 von der zweiten Endstellung B zurück in die erste Endstellung A wird somit der Wickeldraht 60 durch die beiden die Schlitzebene E querenden Hebelenden 94, 96 in der Axialnut 30 zurückgehalten und rutscht erst dann in die nächste Axialnut 30, wenn der Wickelarm 56 wiederum die erste Endstellung A erreicht hat.

Die zum Einlegen des Wickeldrahtes 60 in die Axialnut 30 erforderliche Bewegung der Sperrhebel 90, 92 aus ihrer Schliessstellung S in ihre Offenstellung O erfolgt durch den Wickeldraht 60 selber, kurz bevor der Wickelarm 56 eine der beiden Endstellungen A, B erreicht. Hierbei werden die Sperrhebel 90, 92 durch den in der Schlitzebene E geführten Wickeldraht 60 um die Drehachse u in Pfeilrichtung K soweit verschwenkt, dass der Draht in die zu bewickelnde Axialnut 30 eingelegt werden kann. Sobald der Wickeldraht 60 die Enden 94, 96 der Sperrhebel 90, 92 passiert hat, bewegen sich die Sperrhebel 90, 92 unter Einwirkung der Kraft F des pneumatischen Zylinders 98 selbsttätig in ihre Schliessstellung S.

## Patentansprüche

1. Verfahren zum Wickeln von Spulen in am Aussenumfang rotationssymmetrischer Körper (24) von elektrischen Geräten angeordnete Axialnuten (30), wobei zumindest ein von einem um eine senkrecht zur Rotationsachse (x) des Körpers (24) liegende Drehachse (y) bewegbaren Wickelarm (56) geführter Draht (60) über eine Wickelform (38) in die Nuten (30) eingelegt wird,
dadurch gekennzeichnet, dass
der Körper (24) jeweils nach dem durch eine erste Schwenkbewegung des Wickelarmes (56) um seine Drehachse (y) erfolgten Einlegen des Drahtes (60) in eine erste Nut (30) um wenigstens eine Nutenteilung (n) um seine Rotationsachse (x) gedreht, der Draht (60) durch eine der ersten Schwenkbewegung entgegengesetzte zweite Schwenkbewegung in eine zweite Nut (30) eingelegt und nach dem Einlegen in die zweite Nut zur Bildung einer Spulenwicklung durch eine weitere Drehung des Körpers an den Anfang der ersten Nut zurückgeführt wird.

2. Vorrichtung zur Durchführung des Verfahrens nach Anspruch 1, mit einer Einrichtung zum Aufspannen und Verschalten des Körpers (24) um wenigstens eine Nutenteilung (n), wenigstens einem Wickelarm (56) zur Drahtführung und wenigstens einer Wickelform (38) als Einlegehilfe für den in die Nuten einzulegenden Draht,
dadurch gekennzeichnet, dass
die Wickelform (38) einen Drahtführungsschlitz (46) mit wenigstens einer quer zur Schlitzebene (E) angeordneten Rückhaltefläche (52) zur zeitweiligen Fixierung des Drahtes (60) am Grund der Nut (30) während der Schwenkbewegung des Wickelarmes (56) aufweist.

3. Vorrichtung nach Anspruch 2, dadurch gekennzeichnet, dass der Drahtführungsschlitz (46) der Wickel form (38) in einer hinterschnittenen Nut (50) endet und die Hinterschneidungsflächen (52) die Rückhalteflächen bilden.

4. Vorrichtung nach Anspruch 3, dadurch gekennzeichnet, dass die Wickelform (38) querschnittlich im wesentlichen U-förmig mit einem Bodenteil (44) und zwei von diesem abragenden Schenkelteilen (40,42) ausgebildet ist und der Drahtführungsschlitz (46) in den beiden Schenkelteilen (40,42) in je einer hinterschnittenen Nut (50) endet.

5. Vorrichtung nach Anspruch 3 oder 4, dadurch gekennzeichnet, dass der Boden (54) der hinterschnittenen Nut (50) eine die Nut gegen die Aussenseite der Schenkelteile (40,42) erweiternde Schrägfläche bildet.

6. Vorrichtung nach einem der Ansprüche 2 bis 5, dadurch gekennzeichnet, dass die Wickelform (38) radial zum Körper (24) bewegbar angeordnet ist.

7. Vorrichtung zur Durchführung des Verfahrens nach Anspruch 1, mit einer Einrichtung zum Aufspannen und Verschalten des Körpers (24) um wenigstens eine Nutenteilung (n), wenigstens einem Wickelarm (56) zur Drahtführung, sowie Wickelformen (78,80) als Einlegehilfe für den in die Nuten einzulegenden Draht,
dadurch gekennzeichnet, dass
die Wickelformen (78,80) einen Drahtführungsschlitz (76) mit einer Schlitzebene (E) bilden und beidseits der Wickel formen (78,80) zur Rückhaltung des Drahtes in der Nut (30) während der Schwenkbewegung des Wickelarmes (26) zwei starr miteinander verbundene Sperrelemente (90,92) angeordnet sind, wobei die Sperrelemente durch den in die Nut (30) einzulegenden Draht (60) während des Einlegevorganges gegen die Kraft (F) eines Federelementes (98) in eine Offenstellung (O) bringbar und nach erfolgtem Einlegen des Drahtes (60) in die Nut (30) durch die Kraft (F) des Federelementes (98) selbsttätig in eine die Schlitzebene (E) querende Schliessstellung (S) rückführbar sind.

8. Vorrichtung nach Anspruch 7, dadurch gekennzeichnet, dass die Sperrelemente als Sperrhebel (90,92) ausgebildet und um eine gemeinsame Drehachse (u) von der Offenstellung (O) in die Schliessstellung (S) schwenkbar sind.

9. Vorrichtung nach Anspruch 8, dadurch gekennzeichnet, dass die Sperrhebel (90,92) beidends eines in einer der Wickelformen (90) drehbar gelagerten Bolzens (88) festgelegt sind.

10. Vorrichtung nach einem der Ansprüche 7 bis 9, dadurch gekennzeichnet, dass das Federelement ein pneumatischer Zylinder (98) ist.

11. Anwendung des Verfahrens nach Anspruch 1 bzw. Verwendung der Vorrichtungen nach einem der Ansprüche 2 bis 6 oder 7 bis 10 zum Wickeln von Spulen um einzelne oder mehrere Zähne von Statoren von Elektronikmotoren.
